# EUROPÄISCHE PATENTSCHRIFT

(11) **EP 4 088 056 B1**
(45) Veröffentlichungstag und Bekanntmachung des Hinweises auf die Patenterteilung: **19.03.2025**
(21) Anmeldenummer: 20837951.1
(22) Anmeldetag: 16.12.2020
(51) Int. Cl.: F16L 23/04, F16L 23/16, F16L 23/18, F16L 23/22, F16J 15/02, F16J 15/06

(54) **DICHTUNGSVORRICHTUNG UND VERFAHREN ZU DEREN HERSTELLUNG SOWIE ROHRLEITUNGSSYSTEM**
SEALING DEVICE AND METHOD FOR THE PRODUCTION THEREOF AND PIPELINE SYSTEM
DISPOSITIF D'ÉTANCHÉITÉ ET SON PROCÉDÉ DE FABRICATION ET SYSTÈME DE CONDUITES

(30) Priorität: 10.01.2020 DE 102020200271; 09.10.2020 DE 102020212767
(43) Veröffentlichungstag der Anmeldung: 16.11.2022
(73) Patentinhaber: Glatt Gesellschaft mit beschränkter Haftung, 79589 Binzen (DE)
(72) Erfinder: NOWAK, Reinhard, 79540 Lörrach (DE); KESER, Julian, 79591 Eimeldingen (DE); THAL, René, 79588 Efringen-Kirchen (DE); MÜHLHANS, Stefan, 79588 Efringen-Kirchen (DE); STEINKE, Lars, 79541 Lörrach (DE); KOPF, Andreas, 79576 Weil am Rhein (DE)
(74) Vertreter: Patentanwälte Magenbauer & Kollegen Partnerschaft mbB
(86) Internationale Anmeldenummer: PCT/EP2020/086508
(87) Internationale Veröffentlichungsnummer: WO 2021/139988

(56) Entgegenhaltungen:
- EP-A1- 2 138 744
- EP-A1- 2 242 004
- WO-A1-2010/036388
- US-A1- 2007 012 117

## Beschreibung

Die Erfindung betrifft eine Dichtungsvorrichtung zur Abdichtung einer Rohrleitungsanordnung, die zwei eine Rohrleitungsmittelachse aufweisende Rohrleitungseinheiten und eine Spanneinrichtung aufweist, wobei eine Rohrleitungseinheit eine über eine Rohrleitungsaußenoberfläche, eine Rohrleitungsstirnfläche und einen Rohrleitungsaußendurchmesser verfügende Rohrleitung und einen einen Rohrstutzeninnendurchmesser aufweisenden Rohrstutzen umfasst, und der Rohrstutzen über einen eine Flanschabschnittsstirnfläche aufweisenden Flanschabschnitt sowie einen eine Rohrabschnittsinnenoberfläche aufweisenden Rohrabschnitt verfügt, und wobei die Spanneinrichtung die Flanschabschnitte der Rohrstutzen der zwei Rohrleitungseinheiten axial miteinander verspannt, wobei die Dichtungsvorrichtung in ihrer Gebrauchsstellung eine axial zwischen den Flanschabschnittsstirnflächen der Rohrstutzen angeordnete Dichtung aufweist.

Darüber hinaus betrifft die Erfindung ein Rohrleitungssystem.

Überdies betrifft die Erfindung ein Verfahren zur Herstellung einer Dichtungsvorrichtung zur Abdichtung einer Rohrleitungsanordnung.

Dichtungsvorrichtungen in den verschiedensten Ausführungsformen, insbesondere in Form von O-Ringen, gehören seit langer Zeit zum Stand der Technik. Nachteilig an diesen Dichtungsvorrichtung ist, dass diese mit der Zeit spröde werden und dichtungsspezifische Informationen auf der Dichtungsmantelfläche der Dichtungsvorrichtung nicht mehr identifizierbar sind, sodass eine Nachverfolgung dieser Informationen sehr große Schwierigkeiten bereitet.

EP 2 138 744 A1 offenbart eine insbesondere als Polymer-Dichtung ausgebildete Dichtungsvorrichtung zur Abdichtung zweier Bauteile, wobei an der Dichtungsvorrichtung ein Sensor angeordnet ist. Der Sensor erfasst bspw. die Temperatur, den Druck, die Beschleunigung, usw., wobei die ermittelten Daten gespeichert werden und anschließend u.a. per radio-frequency identification (RFID) auslesbar sind.

Die WO 2010/036388 A1 beschreibt eine Dichtungsvorrichtung mit einer Dichtung bspw. zur Abdichtung einer Rohrleitungsanordnung.

In der EP 2 242 004 A1 wird ein Verfahren beschrieben, in dem ein Datenträger von einem spritzgießfähigen Material, insbesondere von einem thermoplastischen Elastomer (TPE) umhüllt wird.

Die US 2007/012117 A1 offenbart die genaue und einfache Verwaltung der Leistungsverschlechterung und der Lebensdauer von Dichtungsringen und anderer verschiedener Informationen über jeden Dichtungsring. Um dieses Ziel zu erreichen, weist ein Dichtungsring, der an einem einander zugewandten Teil von Elementen angebracht wird, um so einen Raum zwischen beiden Elementen abzudichten, auf: einen Hauptkörperteil, der ringförmig ist und elastisch verformt werden kann; und einen Schaltungschip, der fest mit dem Hauptkörperteil verbunden ist und eine ein Informations-übertragungsmittel zum Übertragen der Informationen mit der Außenseite des Dichtungsrings.

Aufgabe der Erfindung ist es daher eine Dichtungsvorrichtung und ein Verfahren zur Herstellung der Dichtungsvorrichtung bereitzustellen, wobei die Nachverfolgung der Dichtungsvorrichtung deutlich vereinfacht wird und die Nachteile des Standes der Technik ausgeräumt werden.

Diese Aufgabe wird bei einer Dichtungsvorrichtung eingangs genannter Art dadurch gelöst, dass die Dichtungsvorrichtung über einen der Dichtung zugeordneten Datenträger verfügt, der einen elektronischen mit dichtungsspezifischen Informationen beschreibbaren oder beschriebenen Datenspeicher umfasst, wobei die Dichtung der Dichtungsvorrichtung eine sich radial um eine Dichtungsvorrichtungsmittelachse erstreckende Dichtungsmantelfläche aufweist, an der ein den als Einlegeteil in die Dichtung eingebrachten Datenträger aufweisender Dichtungsabschnitt angeordnet ist. Der beschreibbare, bevorzugt wiederbeschreibbare, Datenspeicher des Datenträgers ermöglicht ein flexibles Datenmanagement der Dichtungsvorrichtung. Die dichtungsspezifischen Informationen auf dem Datenträger, insbesondere auf dem RFID-Transponder, können jederzeit geändert, gelöscht oder ergänzt werden. Insbesondere Produkt-, Wartungs-, Produktions- oder Servicedaten sind so direkt an der Dichtungsvorrichtung jederzeit als dichtungsspezifische Informationen verfügbar. Zweckmäßigerweise ist die Dichtungsvorrichtung insbesondere für Klemmstutzen nach DIN 32676 ausgebildet.

Zweckmäßigerweise aber nicht erfinderisch ist der der Dichtung zugeordnete Datenträger außen an der Dichtung angeordnet. Insbesondere ist hierdurch auch eine räumliche Trennung zwischen Dichtung und Datenträger möglich. Bspw. wird der Datenträger an einem anderen Ort als die Dichtung bereitgestellt, sodass Dichtung und Datenträger keinen direkten Kontakt miteinander haben. Hierdurch wird ausgeschlossen, dass ein in der über Rohrleitungseinheiten verfügenden Rohrleitungsanordnung geführtes und gegenüber der Umwelt abzudichtendes Medium in Kontakt mit dem Datenspeicher kommen kann. Das bspw. aggressive Medium, wie eine Säure, eine Lauge oder dergleichen, kann dann insbesondere die Dichtung zersetzen, aber der Datenträger ist stets auslesbar, sodass jederzeit die auf dem Datenträger gespeicherten Informationen abrufbar sind.

Vorteilhafterweise sind drei unterschiedliche Datenträger einsetzbar:
- Datenträger, die ausschließlich auslesbar sind und die individuell durch den Lieferanten einmalig beschrieben werden, wobei es jedoch nicht möglich ist, nachträglich dichtungsspezifische Informationen hinzuzufügen, zu löschen oder zu überschreiben. Bspw. wird hier das Herstellungsdatum sowie die Eigenschaften der Dichtungsvorrichtung als dichtungsspezifische Information herstellerseitig aufgespielt.
- Datenträger sind einmalig hersteller- oder kundenseitig beschreibbar und beliebig oft auslesbar. Hierdurch hat der Kunde die Möglichkeit bspw. das Datum des Einbaus der Dichtungsvorrichtung in einer Anlage oder dergleichen als weitere dichtungsspezifische Information auf den Datenträger zu spielen. Vorteilhaft ist hierbei, dass nach dem einmaligen Aufspielen der dichtungsspezifischen Informationen nur noch das Auslesen ermöglicht wird. Somit wird ein fälschliches oder absichtliches Ändern der dichtungsspezifischen Informationen verhindert, wodurch die Qualität der Anlage verbessert wird.
- Datenträger, die ein unbeschränktes hersteller- oder kundenseitiges Beschreiben und Auslesen des Datenspeichers des Datenträgers erlauben. Auch möglich ist durch das Setzen eines Schreibschutzes ein Sperren der Datenträger sowohl für das Beschreiben und/oder Auslesen.

Bevorzugt wird die Dichtungsvorrichtung im Rohrleitungsbau im Anlagenbau, in der Bio-, Pharma-, Chemie- oder Lebensmittelindustrie bzw. im Sanitärbereich verwendet.

Diesbezüglich ist der Datenspeicher des Datenträgers auslesbar, insbesondere kontaktlos. Bevorzugt ist der Datenträger der Dichtungsvorrichtung als RFID-Transponder ausgebildet. Die sichtkontaktlose Kommunikation zwischen RFID-Transponder und Schreib-Lesesystem bietet eine hohe Unempfindlichkeit gegenüber Verschmutzungen bspw. durch die Anbringung an geschützten Stellen, eine unsichtbare Integration in bestehende Produkte und eine vereinfachte Prozessoptimierung. Zudem verfügt jeder Datenträger über eine eineindeutige Zuordnung, aufgrund seiner weltweit nur einmal vergebenen Seriennummer. Das garantiert die genaue Zuordnung auf Einzelproduktebene und eine vollständige Produktindividualisierung. Auch das gleichzeitige Lesen mehrerer RFID-Transponder in einem Arbeitsschritt ist möglich und beschleunigt so die Arbeitsabläufe.

Nach einer weiter vorteilhaften Ausgestaltung der Dichtungsvorrichtung ist die Dichtung konfiguriert, um einen definierten Übergang zwischen den zwei miteinander verspannten Rohrleitungseinheiten auszubilden, wobei der definierte Übergang so ausgebildet ist, dass die Wölbung gegenüber einem Rohrleitungsinnendurchmesser einen stumpfen Winkel α bildet, wodurch ein Ansammeln von Rückständen des durch die Rohrleitungsanordnung strömenden Mediums oder der durch die Rohrleitungsanordnung strömenden Medien nicht stattfindet.

Entsprechend einer weiteren bevorzugten Ausbildung der Rohrleitungsanordnung weist die Dichtung einen Dichtungseinsatz aufweist, der konfiguriert ist, um einen axialen Mindestabstand zwischen den zwei Rohrleitungseinheiten zu definieren. Die Einstellung eines axialen Mindestabstandes mittels der einen Dichtungseinsatz umfassenden Dichtung zwischen den zwei Rohrleitungseinheiten ist vorteilhaft, da der maximale Anpressdruck der Dichtfläche vorgebbar ist. Zudem können durch den nicht unterschreitbaren Mindestabstand zwischen den zwei Rohrleitungseinheiten aufgrund des Dichtungseinsatzes Nacharbeiten an den Rohrleitungseinheiten, insbesondere an den diesbezüglichen Rohren, entfallen.

Bevorzugt weist der Dichtungseinsatz eine als Anschlag ausgebildete Dichtungseinsatzstirnfläche auf. Eine als Anschlag ausgebildete Dichtungseinsatzstirnfläche ermöglicht eine einfache Realisierung zur Begrenzung des Mindestabstandes zwischen den zwei zu verspannenden Rohrleitungseinheiten. Besonders bevorzugt ist der Datenträger als ein Teil des Dichtungseinsatzes ausgebildet ist. Somit bildet der Datenträger einen Teil des Dichtungseinsatzes.

Entsprechend einer zusätzlichen vorteilhaften Weiterbildung der Dichtungsvorrichtung weist die Dichtung eine sich radial um eine Dichtungsvorrichtungsmittelachse erstreckende Dichtungsmantelfläche auf, an der ein den Datenträger aufweisender Dichtungsabschnitt angeordnet ist. Hierdurch ist der Datenträger, insbesondere der als RFID-Transponder ausgebildete Datenträger, verbessert im Gebrauchszustand der Dichtungsvorrichtung auslesbar. Die Spanneinrichtung ist als Gelenkklammer ausgebildet und der Dichtungsabschnitt ist oder wird bevorzugt durch ein Gelenkklammergelenk der Spanneinrichtung nach außen führbar geführt. Vorteilhafterweise ist die Dichtung aus Kautschuk, bevorzugt aus Nitrilkautschuk oder Perflourkautschuk, Silikon, Polyethylen oder Polytetraflourethylen hergestellt.

Bevorzugt wird die Aufgabe durch ein Rohrleitungssystem umfassend eine Rohrleitungsanordnung und eine Dichtungsvorrichtung nach einem der Ansprüche 1 bis 9 gelöst.

Weiterhin wird diese Aufgabe bei einem Verfahren der eingangs genannten Art dadurch gelöst, dass die Dichtungsvorrichtung über einen der Dichtung zugeordneten Datenträger verfügt, der einen elektronischen mit dichtungsspezifischen Informationen beschreibbaren oder beschriebenen Datenspeicher umfasst, wobei die Dichtung der Dichtungsvorrichtung eine sich radial um eine Dichtungsvorrichtungsmittelachse erstreckende Dichtungsmantelfläche aufweist, an der ein den Datenträger aufweisender Dichtungsabschnitt angeordnet ist, wobei der Datenträger als Einlegeteil mit der Dichtung vergossen wird, umfassend die Schritte:
a) Einbringen des Datenträgers in ein Werkzeug,
b) Vergießen des Werkzeugs mit Dichtungswerkstoff und
c) Ausbringen der hergestellten Dichtungsvorrichtung aus dem Werkzeug.

Dieses Verfahren gestattet eine schnelle und kostengünstige Herstellung der Dichtungsvorrichtung. Vorteilhafterweise ist das durchgeführte Verfahren ein Spritzgießverfahren oder ein Formpressverfahren. Zweckmäßigerweise ist die Dichtungsvorrichtung so insbesondere für Klemmstutzen nach DIN 32676 ausgebildet. Bevorzugt wird in Schritt a) ein den Datenträger umfassender Dichtungseinsatz in das Werkzeug eingebracht. Dies hat den Vorteil, dass kein Dichtungsabschnitt benötigt wird, der durchaus einfach von der Dichtungsvorrichtung abtrennbar ist.

Entsprechend einer weiteren vorteilhaften Ausgestaltung ist die durch das Verfahren hergestellte Dichtungsvorrichtung eine Dichtungsvorrichtung gemäß Anspruch 2 ist.

Nachfolgend wird die Erfindung anhand der beiliegenden Zeichnung näher erläutert dieser zeigen
- Figur 1: eine Schnittdarstellung einer Rohrleitung und eines Rohrstutzens,
- Figur 2: eine Schnittdarstellung der Rohrleitung und des Rohrstutzens, wobei der Rohrstutzen axial auf die Rohrleitung aufgesteckt ist,
- Figur 3: eine Schnittdarstellung einer Rohrleitungseinheit,
- Figur 4: eine Schnittdarstellung von zwei Rohrleitungseinheiten, wobei zwischen den Rohrleitungseinheiten eine Dichtung angeordnet ist,
- Figur 5: eine einen Ausschnitt A im Bereich von zwei miteinander verspannten Rohrleitungseinheiten aufweisende Schnittdarstellung eines Ausführungsbeispiels einer Rohrleitungsanordnung,
- Figur 6: eine Detailansicht des in Fig. 5 dargestellten Ausschnitts A im Bereich der zwei miteinander verspannten Rohrleitungseinheiten,

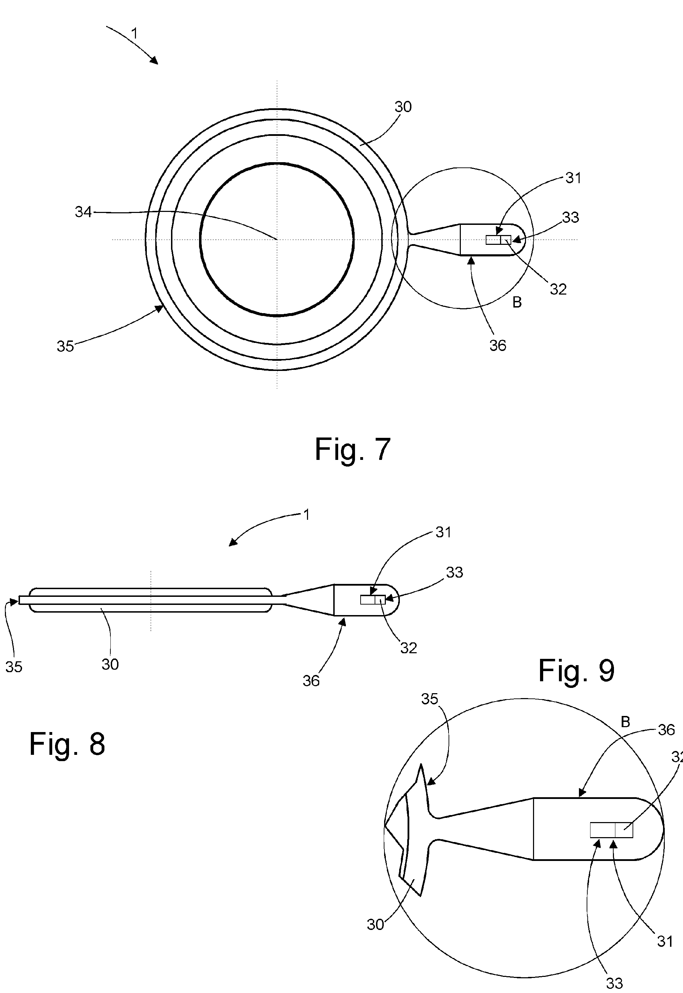

- Figur 7: eine Draufsicht auf erste Ausführungsform einer eine Dichtung und einen Datenträger aufweisenden Dichtungsvorrichtung mit Detailausschnitt B,
- Figur 8: eine Seitenansicht der ersten Ausführungsform einer eine Dichtung und einen Datenträger aufweisenden Dichtungsvorrichtung,
- Figur 9: eine Detaildarstellung des in Fig. 7 gezeigten Detailausschnitts B,
- Figur 10: eine Draufsicht auf eine zweite Ausführungsform einer eine Dichtung und einen Datenträger aufweisenden Dichtungsvorrichtung,
- Figur 11: eine Draufsicht auf eine dritte Ausführungsform einer eine Dichtung und einen Datenträger aufweisenden Dichtungsvorrichtung,
- Figur 12: eine Draufsicht auf eine vierte Ausführungsform einer eine Dichtung und einen Datenträger aufweisenden Dichtungsvorrichtung und
- Figur 13: eine Draufsicht auf einen Raum mit einer fünften Ausführungsform einer eine Dichtung und einen Datenträger aufweisende Dichtungsvorrichtung.

Sofern keine anderslautenden Angaben gemacht werden, bezieht sich die nachfolgende Beschreibung auf sämtliche in der Zeichnung illustrierten Ausführungsformen einer erfindungsgemäßen Dichtungsvorrichtung 1 zur Abdichtung einer Rohrleitungsanordnung 2.

Die Rohrleitungsanordnung 2 weist zwei eine Rohrleitungsmittelachse 3 aufweisende Rohrleitungseinheiten 4 und eine Spanneinrichtung 5 auf. Die Rohrleitungseinheiten 4 umfassen eine Rohrleitung 6 und einen Rohrstutzen 7, wobei Rohrleitung 6 und Rohrstutzen 7 an der Rohrleitungsmittelachse 3 ausgerichtet sind.

Die Rohrleitung 6 weist eine Rohrleitungsaußenoberfläche 8, eine Rohrleitungsstirnfläche 9 und einen Rohrleitungsaußendurchmesser 10 auf. Außerdem ist die Rohrleitung 6 entsprechend einer Vorgabe in Bezug auf eine Rohrlänge und eine Rohrbiegung ausgebildet, wobei in der illustrierten Ausführungsform eine gerade Rohrleitung 1 verwendet wird. In anderen nicht illustrierten Ausführungsformen ist die Rohrlänge und die Rohrbiegung anders ausgebildet.

Der Rohrstutzen 7 weist einen Rohrstutzeninnendurchmesser 11 auf und verfügt über einen eine Flanschabschnittsstirnfläche 12 umfassenden Flanschabschnitt 13 und einen eine Rohrabschnittsinnenoberfläche 14 aufweisenden Rohrabschnitt 15. In der Flanschabschnittstirnfläche 12 des Flanschabschnitts 13 ist eine Nut 16 zur teilweisen Aufnahme einer Dichtungsvorrichtung 1 ausgebildet.

Zudem weist die Rohrabschnittsinnenoberfläche 14 eine Struktur 18 in Form von Erhebungen 19 auf.

Der Rohrstutzen 7 ist in Achsrichtung der Rohrleitungsmittelachse 3 axial auf die Rohrleitung 6 aufgesteckt. Flanschabschnittsstirnfläche 12 und Rohrleitungsstirnfläche 9 sind hierbei bündig zueinander ausgerichtet. In der dargestellten Ausführungsform sind der Rohrleitungsaußendurchmesser 10 und der Rohrstutzeninnendurchmesser 11 gleich groß.

In einer anderen nicht illustrierten Ausführungsform ist der Rohrleitungsaußendurchmesser 10 der Rohrleitung 6 größer als der Rohrstutzeninnendurchmesser 11 des Rohrstutzens 7. Somit wird unmittelbar beim axialen Aufstecken des Rohrstutzens 7 auf die Rohrleitung 6 eine Presspassung erzeugt. Eine solche Presspassung stellt eine kraftschlüssige Verbindung von Rohrleitung 6 und Rohrstutzen 7 her.

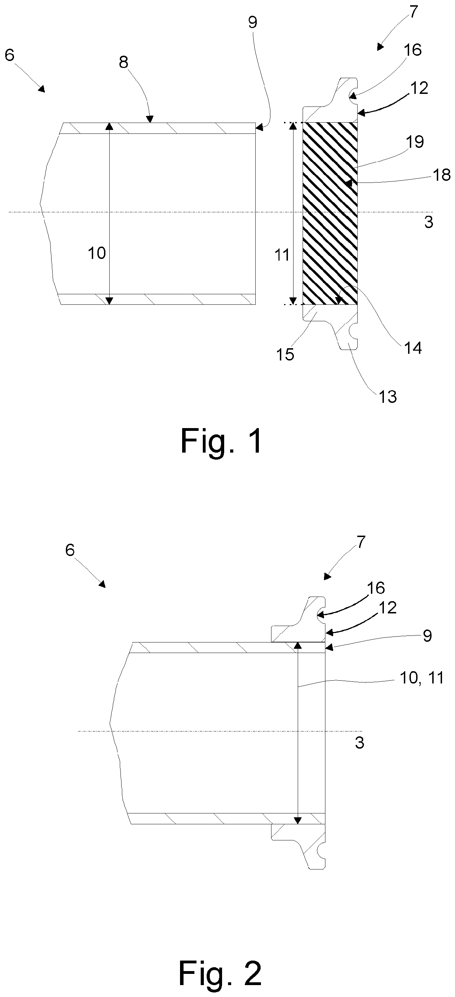

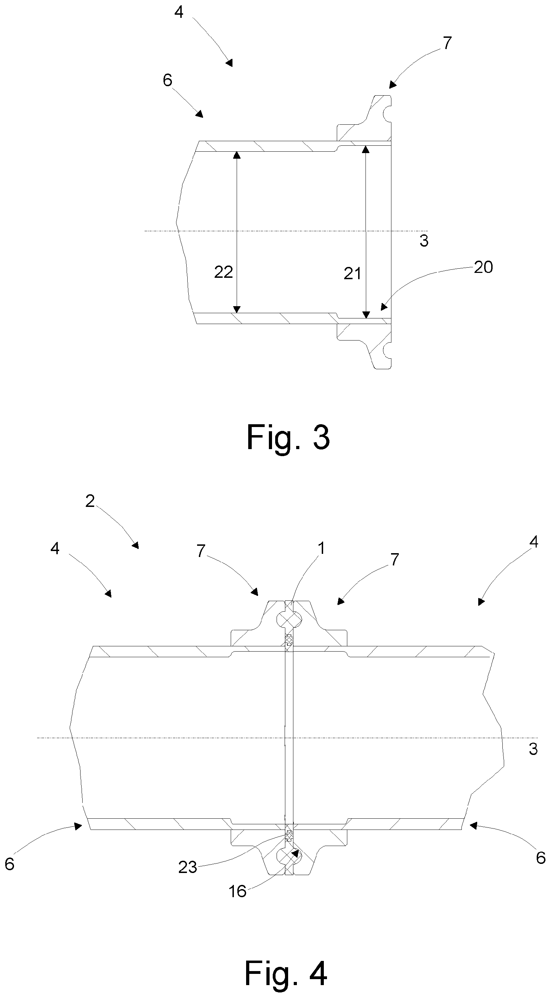

Die Rohrleitungseinheit 4 umfasst einen auf eine Rohrleitung 6 axial aufgesteckten Rohrstutzen 7. Im Unterschied zur in Fig. 2 dargestellten Anordnung ist in der Fig. 3 in der Rohrleitungseinheit 4 die Rohrleitung 6 durch radiales Aufweiten, insbesondere der Rohrleitungswände, in dem Rohrstutzen 7 mittels Presssitz 20 fixiert. Der Rohrstutzen 7 ist somit kraftschlüssig mit der Rohrleitung 6 verbunden. Andere herkömmliche Verbindungsmöglichkeiten, wie Verschweißen von Rohrstutzen 7 und Rohrleitung 6 sind in anderen Ausführungsformen möglich, aber hier nicht illustriert.

Die radiale Aufweitung wird mittels eines Werkzeugs, insbesondere eines Einwalzwerkzeugs, erreicht und wird auch als Haftaufweitung der Rohrleitung 6 bezeichnet. Nach dem radialen Aufweiten ist eine Querschnittsfläche der Rohrleitung 6 im Bereich der Aufweitung größer als eine ursprüngliche Querschnittsfläche der Rohrleitung 6. Somit ist durch das radiale Aufweiten der Rohrleitung 6 der aufgeweitete Rohrleitungsinnendurchmesser 21 im Bereich einer Überlappung von Rohrstutzen 7 und Rohrleitung 6 größer als der ursprüngliche Rohrleitungsdurchmesser 22.

Durch auf der Rohrabschnittsinnenoberfläche 14 angeordnete Struktur 18 in Form von Erhebungen 19 wird durch das Aufweiten der Rohrleitung 6 neben einer kraftschlüssigen auch eine formschlüssige Verbindung zwischen Rohrleitung 6 und Rohrstutzen 7 hergestellt. Die Struktur 18 kann auch in anderer Form ausgebildet sein, bspw. als Nut oder dergleichen.

In anderen nicht dargestellten Ausführungsformen ist vor dem radialen Aufweiten der Rohrleitung 6 die Rohrabschnittsinnenoberfläche 14 und/oder die Rohrleitungsaußenoberfläche 8 zumindest teilweise strukturiert.

Axial zwischen den Rohrleitungseinheiten 4 ist eine einen Dichtungseinsatz 23 aufweisende Dichtungsvorrichtung 1 angeordnet.

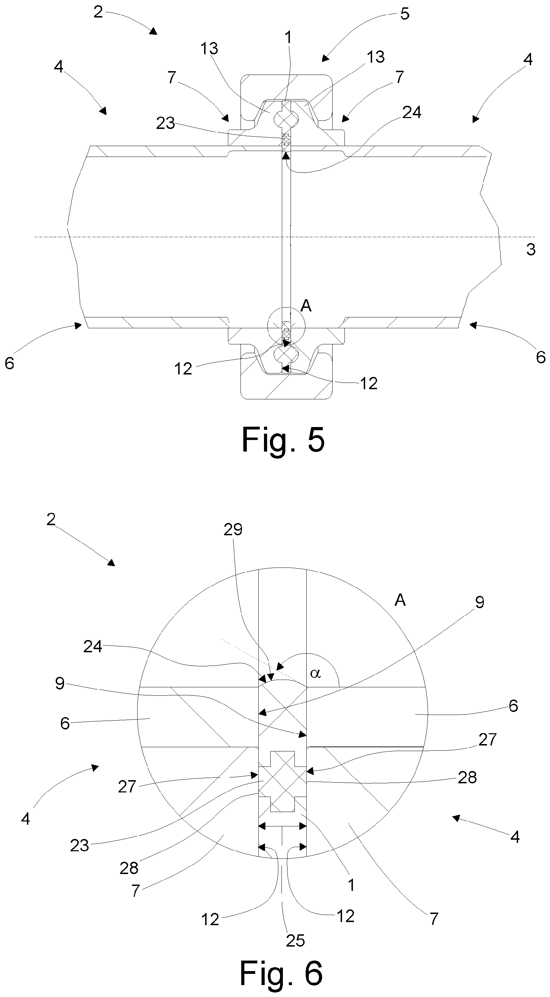

Fig. 5 zeigt eine einen Ausschnitt A im Bereich von zwei miteinander verspannten Rohrleitungseinheiten 4 aufweisende Schnittdarstellung einer Ausführungsform einer Rohrleitungsanordnung 2.

Die Rohrleitungsanordnung 2 weist eine axial zwischen den an den Flanschabschnitten 13 ausgebildeten Flanschabschnittsstirnflächen 12 der Rohrstutzen 7 angeordnete Dichtungsvorrichtung 1 auf. Die Dichtungsvorrichtung 1 ist konfiguriert, um einen definierten Übergang 24 zwischen den zwei miteinander verspannten Rohrleitungseinheiten 4 auszubilden. Der definierte Übergang 24 wird durch die beim Verspannen auf die Dichtungsvorrichtung 1 wirkenden Anpresskräfte ausgebildet.

Eine nachfolgend beschriebene Detailansicht des in Ausschnitt A der Fig. 5 im Bereich der zwei miteinander verspannten Rohrleitungseinheiten 4 zeigt den definierten Übergang 24 vergrößert. Durch den definierten Übergang 24 wird ein Ansammeln von Rückständen bzw. ein Anlagern von Feststoffen des durch die Rohrleitungsanordnung 2 strömenden Mediums oder der durch die Rohrleitungsanordnung 2 strömenden Medien reduziert bzw. findet nicht statt.

Zudem weist die Dichtungsvorrichtung 1 einen Dichtungseinsatz 23 auf. Durch den Dichtungseinsatz 23 wird ein axialer Mindestabstand 25 zwischen den zwei Rohrleitungseinheiten 4 definiert, sodass die zwei Rohrleitungseinheiten 4 beim Verspannen der Rohrleitungsanordnung 2 Anpresskräften ausgesetzt sind, die durch den aufgrund des Dichtungseinsatzes 23 festgelegten, axialen Mindestabstand 25 festgelegt sind.

Die Rohrleitungsanordnung 2 wird mittels Spanneinrichtung 5 axial verspannt. Hierzu werden die Flanschabschnitte 13 der Rohrstutzen 7 der zwei Rohrleitungseinheiten 4 mittels einer Spanneinrichtung 5 axial miteinander verspannt. In der illustrierten Ausführungsform ist die Spanneinrichtung 5 vorteilhafterweise als Gelenkklammer 26 ausgebildet. Durch die als Gelenkklammer 26 ausgebildete Spanneinrichtung 5 können die auf die Dichtungsvorrichtung 13 wirkenden Anpresskräfte, die auf die Fläche bezogen, einem Anpressdruck entsprechen, zusätzlich, z. B. durch eine die Gelenkklammer 26 schließende Flügelmutter oder dergleichen, eingestellt werden. Die Spanneinrichtung 5 kann auch als Flansch-Schrauben-Verbindung ausgebildet sein.

Alternativ können auch Normteile, wie bspw. Messinstrumente, Ventile und Klappen oder dergleichen, hierbei als Rohrleitungseinheit 4 dienen und mit einer anderen zweiten Rohrleitungseinheit 4 zusammen eine Rohrleitungsanordnung 2 ausbilden.

Der Dichtungseinsatz 23 der Dichtungsvorrichtung 1 verfügt über eine als Anschlag 27 ausgebildete Dichtungseinsatzstirnfläche 28. Durch den Dichtungseinsatz 23 ist oder wird somit zwischen den zwei Rohrleitungseinheiten 4 ein axialer Mindestabstand 25 definierbar oder definiert. Die Rohrleitungsstirnflächen 9 und/oder die Flanschabschnittsstirnflächen 12 grenzen im verspannten Zustand der Rohrleitungsanordnung 2 an die Dichtungseinsatzstirnflächen 28 des Dichtungseinsatzes 23 der Dichtungsvorrichtung 1 an. Hierdurch werden der Mindestabstand 25 zwischen den zwei Rohrleitungseinheiten 4 der Rohrleitungsanordnung 2 und somit auch die auf die Dichtungsvorrichtung 1 wirkenden Anpresskräfte genau eingestellt.

Der durch die mittels des Dichtungseinsatzes 23 festgelegten Anpresskräfte definierte Übergang 24 ist bevorzugt so ausgebildet, dass die Wölbung 29 gegenüber einem Rohrleitungsinnendurchmesser 21 einen stumpfen Winkel α bildet. Besonders bevorzugt weist der stumpfe Winkel α einen Winkel α zwischen 100° und 170°, ganz besonders bevorzugt zwischen 120° und 150° auf. Hierdurch wird erreicht, dass Rückstände des die Rohrleitungsanordnung 2 durchströmenden Mediums oder der die Rohrleitungsanordnung 2 durchströmenden Medien reduziert bzw. verhindert werden.

Die Dichtungsvorrichtung 1 verfügt über einen in einer Dichtung 30 angeordneten Datenträger 31, der einen elektronischen mit dichtungsspezifischen Informationen beschreibbaren oder beschriebenen Datenspeicher 32 umfasst. Bevorzugt ist der Datenträger 31 der Dichtungsvorrichtung 1 als RFID-Transponder 33 ausgebildet. Der Datenspeicher 32 des Datenträgers 31 ist so verbessert beschreibbar und/oder auslesbar, insbesondere kontaktlos, bspw. mit einem nicht illustrierten RFID-Lese- und/oder Schreibgerät. Insbesondere Produkt-, Wartungs-, Produktions- oder Servicedaten sind so direkt an der Dichtungsvorrichtung jederzeit als dichtungsspezifische Informationen verfügbar. Zum Beispiel können auf dem Datenträger 31 das Produktionsdatum, das nächste Wartungsdatum, der Zustand der Dichtung selbst, Datum der letzten Inspektion usw. gespeichert sein.

Die Dichtung 30 ist bevorzugt als Flachdichtung ausgebildet, wobei als Dichtungswerkstoff Werkstoffe wie z. B. Elastomere, Pressfaser, Aramidfaser, Kohlenstofffaser, Mineralfaser, Metall, Kupfer zur Verfügung stehen. Auch ummantelte Dichtungsvorrichtungen 1, insbesondere ummantelte Flachdichtungen, sind bevorzugt, wobei diese einen von einer PTFE- oder Metallhülle, vorzugsweise Stahl oder korrosionsbeständige Nickellegierungen, umhüllten Kern (beliebiger Flachdichtungswerkstoff bspw. Faserverbund, PTFE usw.) umfasst. Die Ummantelung schützt den Kern gegen chemischen Angriff vom abzudichtenden Medium. Bevorzugt ist die Dichtung 30 aus Kautschuk, besonders bevorzugt aus Nitrilkautschuk oder Perflourkautschuk, Silikon, Polyethylen oder Polytetraflourethylen hergestellt.

Die Dichtung 30 der Dichtungsvorrichtung 1 weist eine sich radial um eine Dichtungsvorrichtungsmittelachse 34 erstreckende Dichtungsmantelfläche 35 auf, an der ein den Datenträger 31 aufweisender Dichtungsabschnitt 36 angeordnet ist. Der ist Dichtungsabschnitt 36 ist in Form eines Pfannenstiels ausgebildet. Im Gebrauchszustand entsprechen sich Rohrleitungsmittelachse 3 und Dichtungsvorrichtungsmittelachse 34. In einer nicht illustrierten Ausführungsform bspw. fehlt der Dichtungsabschnitt 36, sodass der Datenträger 31 in der Dichtung 30 angeordnet ist. Auch andere Anordnungen in der Dichtungsvorrichtung 1 sind möglich und denkbar.

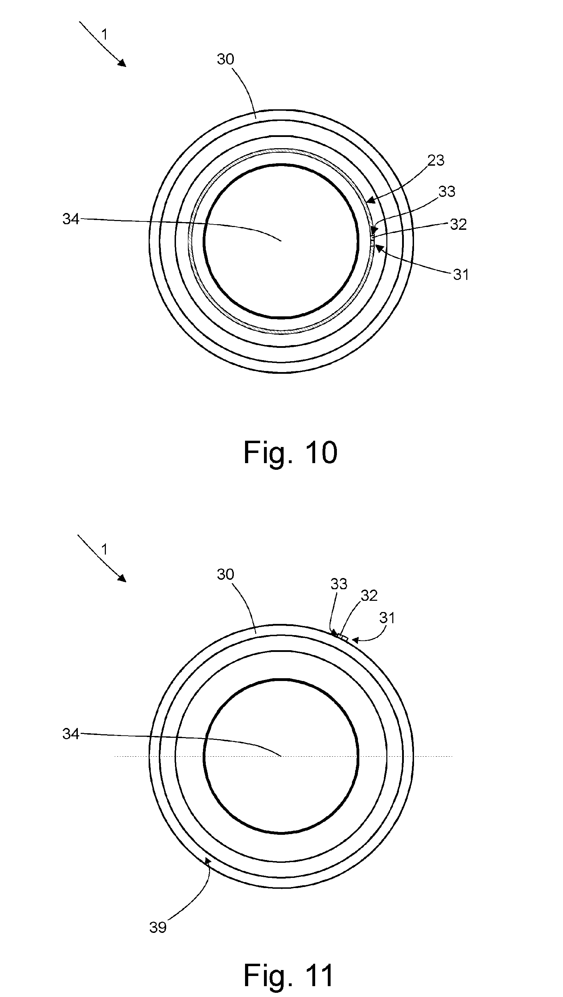

In einer weiteren nicht erfindungsgemäßen Ausführungsform ist der Datenträger 31 als ein Teil des Dichtungseinsatzes 23 ausgebildet. Eine derartige Ausführungsform ist beispielhaft in Fig. 10 dargestellt. Hierdurch sind die Vorteile von Dichtungseinsatz 23 und Datenträger 31 miteinander verbindbar. Zudem ist ein einfaches Entfernen des Datenträgers 31 im Gebrauchszustand dann nicht mehr möglich.

In der nicht erfindungsgemäßen zweiten Ausführungsform der Dichtungsvorrichtung 1 gemäß Fig. 10 ist der der Dichtung 30 zugeordnete, den Datenspeicher 32 umfassende Datenträger 31 somit in der Dichtung 30 angeordnet. Der in der Dichtung 30 angeordnete Datenträger 31 ist daher stets eineindeutig der Dichtung 30 zugeordnet. Der Datenträger 31 ist in die Dichtung eingegossen worden, wodurch der Datenträger 31 im Wesentlichen untrennbar mit der Dichtung 30 verbunden ist. Insbesondere sind somit Dichtung 30 und Datenträger 31 ohne Zerstörung der Dichtung 30 sind voneinander nicht trennbar.

Die Spanneinrichtung 5 ist zweckmäßigerweise als Gelenkklammer 26 ausgebildet und der Dichtungsabschnitt 36 ist durch ein Gelenkklammergelenk der Spanneinrichtung 5 nach außen geführt.

Die Dichtungsvorrichtung 1 zur Abdichtung einer Rohrleitungsanordnung 2 verfügt über einen in der Dichtung 30 angeordneten, elektronischen mit dichtungsspezifischen Informationen beschreibbaren oder beschriebenen Datenträger 31, wobei der Datenträger 31 als Einlegeteil 37 mit der Dichtung 30 in einem Verfahren zur Herstellung der Dichtungsvorrichtung 1 vergossen wird, umfassend die Schritte des Einbringens des Datenträgers 31 in ein Werkzeug, des Vergießens des Werkzeugs mit dem Dichtungswerkstoff und des Ausbringens der hergestellten Dichtungsvorrichtung 1 aus dem Werkzeug.

Bevorzugt ist das durchgeführte Verfahren ein Spritzgießverfahren oder ein Formpressverfahren ist. Besonders bevorzugt ist die durch das Verfahren hergestellte Dichtungsvorrichtung 1 eine Dichtungsvorrichtung 1 gemäß einem der Ansprüche der Dichtungsvorrichtung 1.

Gemäß einem weiteren bevorzugten Verfahren wird in Schritt a der Dichtungseinsatz 23 in das Werkzeug eingelegt, wobei der Datenträger 31 als Teil des Dichtungseinsatzes 23 ausgebildet ist.

Darüber hinaus bevorzugt ist in den Fign. 4 und 5 ein Rohrleitungssystem 38 gezeigt, wobei das Rohrleitungssystem 38 eine Dichtungsvorrichtung 1 und eine Rohrleitungsanordnung 2 umfasst. Dichtungsvorrichtung 1 und Rohrleitungsanordnung 2 sind bevorzugt entsprechend der Figurenbeschreibung ausgebildet.

Eine Draufsicht auf eine dritte, nicht erfindungsgemäße Ausführungsform einer eine Dichtung 30 und einen Datenträger 31 aufweisende Dichtungsvorrichtung 1 ist in Fig. 11 dargestellt. Hierbei ist der den Datenspeicher 32 aufweisende Datenträger 31 außerhalb der Dichtung 30 außen an der Dichtungsseitenfläche 39 angeordnet.

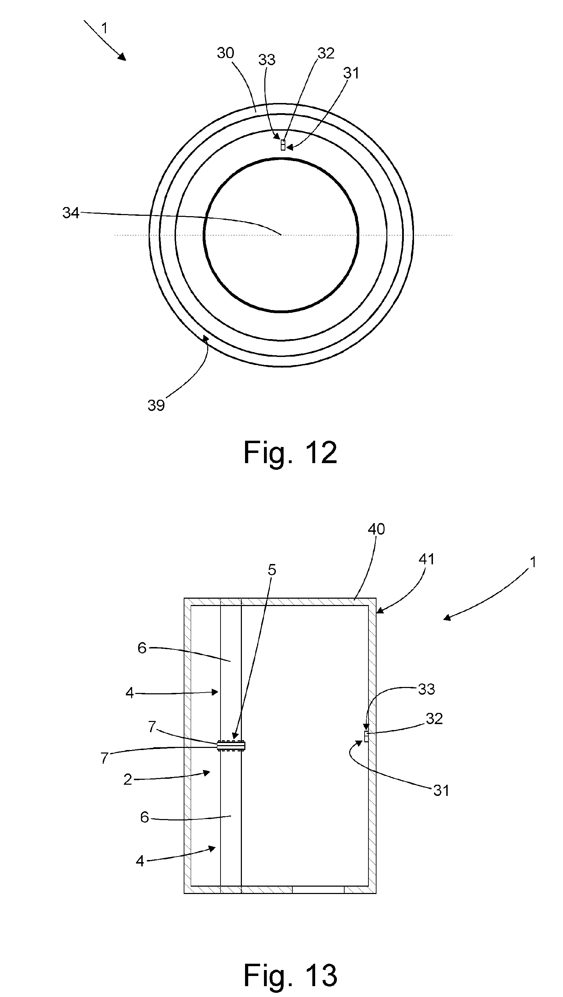

Fig. 12 zeigt eine vierte, nicht erfindungsgemäße Ausführungsform einer Dichtungsvorrichtung 1, wobei auch hier der der Dichtung 30 zugeordnete einen in Form eines RFID-Transponders 33 ausgebildeten Datenspeicher 32 umfassende Datenträger 31 außerhalb der Dichtung 30 angeordnet ist. Zweckmäßigerweise ist der der Dichtung 30 zugeordnete Datenträger 31 außen an der Dichtung 30 angeordnet. Der Datenträger 31 ist an der Dichtungsseitenfläche 39 der Dichtung 30 angeordnet.

Der Datenträger 31 kann auch, wie in einer fünften, nicht erfindungsgemäßen Ausführungsform in Fig. 13 dargestellt, räumlich von der Dichtung 30 getrennt sein. Der Datenträger 31 wird an einem anderen Ort, hier der Wand 40 eines Raumes 41 als die Dichtung 30 bereitgestellt, sodass das Dichtung 30 und Datenträger 31 keinen direkten Kontakt miteinander haben. Hierdurch wird ausgeschlossen, dass ein in der über Rohrleitungseinheiten 4 verfügenden Rohrleitungsanordnung 2 geführtes und gegenüber der Umwelt mittels Dichtung 30 abzudichtendes Medium in Kontakt mit dem Datenspeicher 31 kommen kann. Das bspw. aggressive Medium, wie eine Säure, eine Lauge oder dergleichen, kann dann insbesondere die Dichtung 30 zersetzen, aber der Datenträger 31 ist stets auslesbar, sodass jederzeit die auf dem Datenträger 31 gespeicherten Informationen abrufbar sind.

## Patentansprüche

1. Dichtungsvorrichtung (1) zur Abdichtung einer Rohrleitungsanordnung (2), die zwei eine Rohrleitungsmittelachse (3) aufweisende Rohrleitungseinheiten (4) und eine Spanneinrichtung (5) aufweist, wobei eine Rohrleitungseinheit (4) eine über eine Rohrleitungsaußenoberfläche (8), eine Rohrleitungsstirnfläche (9) und einen Rohrleitungsaußendurchmesser (10) verfügende Rohrleitung (6) und einen einen Rohrstutzeninnendurchmesser (11) aufweisenden Rohrstutzen (7) umfasst, und der Rohrstutzen (7) über einen eine Flanschabschnittsstirnfläche (12) aufweisenden Flanschabschnitt (13) sowie einen eine Rohrabschnittsinnenoberfläche (14) aufweisenden Rohrabschnitt (15) verfügt, und wobei die Spanneinrichtung (5) die Flanschabschnitte (13) der Rohrstutzen (7) der zwei Rohrleitungseinheiten (4) axial miteinander verspannt, wobei die Dichtungsvorrichtung (1) in ihrer Gebrauchsstellung eine axial zwischen den Flanschabschnittsstirnflächen (12) der Rohrstutzen (7) angeordnete Dichtung (30) aufweist, wobei die Dichtungsvorrichtung (1) über einen der Dichtung (30) zugeordneten Datenträger (31) verfügt, der einen elektronischen mit dichtungsspezifischen Informationen beschreibbaren oder beschriebenen Datenspeicher (32) umfasst, **dadurch gekennzeichnet, dass** die Dichtung (30) der Dichtungsvorrichtung (1) eine sich radial um eine Dichtungsvorrichtungsmittelachse (34) erstreckende Dichtungsmantelfläche (35) aufweist, an der ein den als Einlegeteil (37) in die Dichtung (30) eingebrachten Datenträger (31) aufweisender Dichtungsabschnitt (36) angeordnet ist.

2. Dichtungsvorrichtung (1) nach Anspruch 1, **dadurch gekennzeichnet, dass** der Datenspeicher (32) des Datenträgers (31) auslesbar ist.

3. Dichtungsvorrichtung (1) nach Anspruch 1 oder 2, **dadurch gekennzeichnet, dass** der Datenspeicher (32) des Datenträgers (31) kontaktlos auslesbar ist.

4. Dichtungsvorrichtung (1) nach einem der vorhergehenden Ansprüche, **dadurch gekennzeichnet, dass** der Datenträger (31) der Dichtungsvorrichtung (1) als RFID-Transponder (33) ausgebildet ist.

5. Dichtungsvorrichtung (1) nach einem der vorhergehenden Ansprüche, **dadurch gekennzeichnet, dass** die Dichtung (30) konfiguriert ist, um einen definierten Übergang (24) zwischen den zwei miteinander verspannten Rohrleitungseinheiten (4) auszubilden, wobei der definierte Übergang (24) so ausgebildet ist, dass die Wölbung (29) gegenüber einem Rohrleitungsinnendurchmesser (21) einen stumpfen Winkel (α) bildet, wodurch ein Ansammeln von Rückständen des durch die Rohrleitungsanordnung (2) strömenden Mediums oder der durch die Rohrleitungsanordnung (2) strömenden Medien nicht stattfindet.

6. Dichtungsvorrichtung (1) nach einem der vorhergehenden Ansprüche, **dadurch gekennzeichnet, dass** die Dichtung (30) einen Dichtungseinsatz (23) aufweist, der konfiguriert ist, um einen axialen Mindestabstand (25) zwischen den zwei Rohrleitungseinheiten (4) zu definieren.

7. Dichtungsvorrichtung (1) nach Anspruch 6, **dadurch gekennzeichnet, dass** der Dichtungseinsatz (23) eine als Anschlag (27) ausgebildete Dichtungseinsatzstirnfläche (28) aufweist.

8. Dichtungsvorrichtung (1) nach einem der vorhergehenden Ansprüche, **dadurch gekennzeichnet, dass** die Spanneinrichtung (5) als Gelenkklammer (26) ausgebildet ist und der Dichtungsabschnitt (36) durch ein Gelenkklammergelenk der Spanneinrichtung (5) nach außen führbar ist oder geführt wird.

9. Dichtungsvorrichtung (1) nach einem der vorhergehenden Ansprüche, **dadurch gekennzeichnet, dass** die Dichtung (30) aus Kautschuk, bevorzugt aus Nitrilkautschuk oder Perflourkautschuk, Silikon, Polyethylen oder Polytetraflourethylen hergestellt ist.

10. Rohrleitungssystem umfassend eine Rohrleitungsanordnung (2) und eine Dichtungsvorrichtung (1) nach einem der Ansprüche 1 bis 9.

11. Verfahren zur Herstellung einer Dichtungsvorrichtung (1) zur Abdichtung einer Rohrleitungsanordnung (2), wobei die Dichtungsvorrichtung (1) über einen der Dichtung (30) zugeordneten Datenträger (31) verfügt, der einen elektronischen mit dichtungsspezifischen Informationen beschreibbaren oder beschriebenen Datenspeicher (32) umfasst, **dadurch gekennzeichnet, dass** die Dichtung (30) der Dichtungsvorrichtung (1) eine sich radial um eine Dichtungsvorrichtungsmittelachse (34) erstreckende Dichtungsmantelfläche (35) aufweist, an der ein den Datenträger (31) aufweisender Dichtungsabschnitt (36) angeordnet ist, wobei der Datenträger (31) als Einlegeteil (37) mit der Dichtung (30) vergossen wird, umfassend die Schritte:
a) Einbringen des Datenträgers (31) in ein Werkzeug,
b) Vergießen des Werkzeugs mit Dichtungswerkstoff und
c) Ausbringen der hergestellten Dichtungsvorrichtung (1) aus dem Werkzeug.

12. Verfahren nach Anspruch 11, **dadurch gekennzeichnet, dass** das durchgeführte Verfahren ein Spritzgießverfahren oder ein Formpressverfahren ist.

13. Verfahren nach Anspruch 11 oder 12, **dadurch gekennzeichnet, dass** in Schritt a) ein den Datenträger (31) umfassender Dichtungseinsatz (23) in das Werkzeug eingebracht wird.

## Claims

1. Sealing device (1) for sealing a pipeline arrangement (2) having two pipeline units (4) with a pipeline central axis (3) and a clamping device (5), wherein a pipeline unit (4) comprises a pipeline (6) having a pipeline outer surface (8), a pipeline end face (9) and a pipeline outer diameter (10) and a pipe socket (7) with a pipe socket inner diameter (11) and the pipe socket (7) is provided with a flange section (13) having a flange section end face (12) and a pipe section (15) having a pipe section inner surface (14), and wherein the clamping device (5) clamps the flange sections (13) of the pipe sockets (7) of the two pipeline units (4) axially to each other, wherein the sealing device (1) has in its position of use a seal (30) located axially between the flange section end faces (12) of the pipe sockets (7), wherein the sealing device (1) has a data medium (31) assigned to the seal (30) and comprising an electronic data memory (32) to which seal-specific information can be or is written, **characterised in that** the seal (30) of the sealing device (1) has a sealing outer surface (35), which extends radially around a sealing device central axis (34), on which a seal section (36) comprising the data medium (31) is arranged, wherein the data medium (31) is cast with the seal as an insert part (37).

2. Sealing device (1) according to claim 1, **characterised in that** the data memory (32) of the data medium (31) is readable.

3. Sealing device (1) according to claim 1 or 2, **characterised in that** the data memory (32) of the data medium (31) is readable in a contactless manner.

4. Sealing device (1) according to any of the preceding claims, **characterised in that** the data medium (31) of the sealing device (1) is designed as an RFID transponder (33).

5. Sealing device (1) according to any of the preceding claims, **characterised in that** the seal (30) is configured to form a defined transition (24) between two pipeline units (4) clamped to each other, wherein the defined transition (24) is designed in such a way, that the curvature (29) with respect to a pipeline inner diameter (21) forms an obtuse angle (α), so that there is no accumulation of residues of the medium or media flowing through the pipeline arrangement (2).

6. Sealing device (1) according to any of the preceding claims, **characterised in that** the seal (30) has a seal insert (23) configured to define an axial minimum distance (25) between the two pipeline units (4).

7. Sealing device (1) according to claim 6, **characterised in that** the seal insert (23) has a seal insert end face (28) designed as a stop (27).

8. Sealing device (1) according to claim 10, **characterised in that** the clamping device (5) is designed as an articulated clamp (26) and the seal section (35) is guidable or guided towards the outside by an articulated clamp joint of the clamping device (5).

9. Sealing device (1) according to any of the preceding claims, **characterised in that** the seal (30) is made of rubber, preferably of nitrile rubber or perfluoro rubber, silicone, polyethylene or polytetrafluoroethylene.

10. Pipeline system comprising a pipeline arrangement (2) and a sealing device according to any of claims 1 to 9.

11. Method for the production of a sealing device (1) for sealing a pipeline arrangement (2), wherein the sealing device (1) has an electronic data medium (31) which is located in the seal (3) and can be or is written on with seal-specific information, **characterized in that**
the seal (30) of the sealing device (1) has a sealing outer surface (35), which extends radially around a sealing device central axis (34), on which a seal section (36) comprising the data medium (31) is arranged, wherein the data medium (31) is cast with the seal as an insert part (37), the method comprising the steps of:
a) Placing the data medium (31) in a tool,
b) Filling the tool with sealing material, and
c) Removing the sealing device (1) produced from the tool.

12. Method according to claim 11, **characterised in that** the method carried out is an injection moulding method or a compression moulding method.

13. Method according to claim 11 or 12, **characterised in that** in step a) a seal insert (23) comprising the data medium (31) is placed in the tool.

## Revendications

1. Dispositif d'étanchéité (1) pour l'étanchéification d'un ensemble de conduites (2), qui présente deux unités de conduite (4) présentant un axe médian de conduite (3) et un système de serrage (5), dans lequel une unité de conduite (4) comprend une conduite (6) disposant d'une surface extérieure de conduite (8), d'une surface frontale de conduite (9) et d'un diamètre extérieur de conduite (10) et une tubulure (7) présentant un diamètre intérieur de tubulure (11), et la tubulure (7) dispose d'une section de bride (13) présentant une surface frontale de section de bride (12) ainsi qu'une section tubulaire (15) présentant une surface intérieure de section tubulaire (14), et dans lequel le système de serrage (5) serre les sections de bride (13) des tubulures (7) des deux unités de conduite (4) axialement l'une avec l'autre, dans lequel le dispositif d'étanchéité (1) présente dans sa position d'utilisation un joint (30) disposé axialement entre les surfaces frontales de section de bride (12) des tubulures (7), dans lequel le dispositif d'étanchéité (1) dispose d'un support de données (31) associé au joint (30), qui comprend une mémoire de données (32) électronique dans laquelle peuvent être inscrites ou sont inscrites des informations spécifiques au joint,
**caractérisé en ce que**
le joint (30) du dispositif d'étanchéité (1) présente une surface d'enveloppe de joint (35) s'étendant radialement autour d'un axe médian de dispositif d'étanchéité (34), sur laquelle est disposée une section de joint (36) présentant le support de données (31) introduit en tant que pièce d'insertion (37) dans le joint (30).

2. Dispositif d'étanchéité (1) selon la revendication 1, **caractérisé en ce que** la mémoire de données (32) du support de données (31) est lisible.

3. Dispositif d'étanchéité (1) selon la revendication 1 ou 2, **caractérisé en ce que** la mémoire de données (32) du support de données (31) est lisible sans contact.

4. Dispositif d'étanchéité (1) selon l'une quelconque des revendications précédentes, **caractérisé en ce que** le support de données (31) du dispositif d'étanchéité (1) est réalisé en tant que transpondeur RFID (33).

5. Dispositif d'étanchéité (1) selon l'une quelconque des revendications précédentes, **caractérisé en ce que** le joint (30) est configuré pour réaliser une transition définie (24) entre les deux unités de conduites (4) serrées l'une avec l'autre, dans lequel la transition définie (24) est réalisée de sorte que la courbure (29) forme un angle obtus (α) par rapport à un diamètre intérieur de conduite (21),
ce qui a pour effet qu'une accumulation de résidus du milieu s'écoulant à travers l'ensemble de conduites (2) ou des milieux s'écoulant à travers l'ensemble de conduites (2) n'a pas lieu.

6. Dispositif d'étanchéité (1) selon l'une quelconque des revendications précédentes, **caractérisé en ce que** le joint (30) présente un insert de joint (23), qui est configuré pour définir une distance minimale axiale (25) entre les deux unités de conduite (4).

7. Dispositif d'étanchéité (1) selon la revendication 6, **caractérisé en ce que** l'insert de joint (23) présente une surface frontale d'insert de joint (28) réalisée en tant que butée (27).

8. Dispositif d'étanchéité (1) selon l'une quelconque des revendications précédentes, **caractérisé en ce que** le système de serrage (5) est réalisé en tant que pince articulée (26) et la section de joint (36) peut être guidée ou est guidée vers l'extérieur par une articulation à pince articulée du système de serrage (5).

9. Dispositif d'étanchéité (1) selon l'une quelconque des revendications précédentes, **caractérisé en ce que** le joint (30) est fabriqué à partir de caoutchouc, de préférence à partir de caoutchouc nitrile ou caoutchouc perfluoré, silicone, polyéthylène ou polytétrafluoréthylène.

10. Système de conduite comprenant un ensemble de conduites (2) et un dispositif d'étanchéité (1) selon l'une quelconque des revendications 1 à 9.

11. Procédé pour la fabrication d'un dispositif d'étanchéité (1) pour l'étanchéification d'un ensemble de conduites (2), dans lequel le dispositif d'étanchéité (1) dispose d'un support de données (31) associé au joint (30), qui comprend une mémoire de données (32) électronique dans laquelle peuvent être inscrites ou sont inscrites des informations spécifiques au joint,
**caractérisé en ce que**
le joint (30) du dispositif d'étanchéité (1) présente une surface d'enveloppe de joint (35) s'étendant radialement autour d'un axe médian de dispositif d'étanchéité (34), sur laquelle est disposée une section de joint (36) présentant le support de données (31), dans lequel le support de données (31) en tant que pièce d'insertion (37) est coulé avec le joint (30), comprenant les étapes :
a) d'introduction du support de données (31) dans un moule,
b) de coulée du matériau de joint dans le moule et
c) d'extraction du dispositif d'étanchéité (1) fabriqué du moule.

12. Procédé selon la revendication 11, **caractérisé en ce que** le procédé mis en œuvre est un procédé de moulage par injection ou un procédé de moulage par compression.

13. Procédé selon la revendication 11 ou 12, **caractérisé en ce que** dans l'étape a) un insert de joint (23) comprenant le support de données (31) est introduit dans le moule.
